(19) **Europäisches Patentamt European Patent Office Office européen des brevets**

(11) **EP 4 468 502 A1**

(12) **EUROPEAN PATENT APPLICATION**

(43) Date of publication:
**27.11.2024 Bulletin 2024/48**

(21) Application number: **24176565.0**

(22) Date of filing: **17.05.2024**

(51) International Patent Classification (IPC):
**H01M 50/446** $^{(2021.01)}$ **H01M 10/052** $^{(2010.01)}$
**H01M 50/403** $^{(2021.01)}$ **H01M 50/414** $^{(2021.01)}$
**H01M 50/417** $^{(2021.01)}$ **H01M 50/449** $^{(2021.01)}$

(52) Cooperative Patent Classification (CPC):
**H01M 50/414; H01M 10/052; H01M 50/403;**
**H01M 50/417; H01M 50/446; H01M 50/449**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.05.2023 KR 20230067456**

(71) Applicants:
• **SK Innovation Co., Ltd.**
**Seoul 03188 (KR)**
• **SK ie technology Co., Ltd.**
**Jongno-gu**
**Seoul**
**03188 (KR)**

(72) Inventors:
• **JI, Sang Yoon**
**34124 Daejeon (KR)**
• **AHN, Jun Hwan**
**34124 Daejeon (KR)**
• **LEE, Chang Hee**
**34124 Daejeon (KR)**
• **KIM, Jun Hyung**
**34124 Daejeon (KR)**

(74) Representative: **Prüfer & Partner mbB**
**Patentanwälte · Rechtsanwälte**
**Sohnckestraße 12**
**81479 München (DE)**

(54) **SEPARATOR, METHOD FOR MANUFACTURING THE SAME, AND SECONDARY BATTERY INCLUDING THE SAME**

(57)  Provided are a separator, a method for manufacturing the same, and a secondary battery including the same. Specifically, a separator including hollow conductive particles, a method for manufacturing the same, and a secondary battery including the same are provided. The separator according to an exemplary embodiment of the present disclosure includes: a porous substrate; and at least one coating layer which is placed on one or both surfaces of the porous substrate and includes inorganic particles and hollow conductive particles. The separator of the present disclosure may prevent electrical isolation of lithium ions and accumulation of dead lithium ions to suppress formation and growth of lithium dendrites. Accordingly, battery safety may be secured. The present invention further provides a method for manufacturing a secondary battery including the separator. Further provided is a use of the hollow conductive particles to suppress swelling; to suppress elution of an electrolyte; and to suppress formation and/or growth of dendrites in a secondary battery.

FIG. 3

EP 4 468 502 A1

Processed by Luminess, 75001 PARIS (FR)

## Description

### TECHNICAL FIELD

The following disclosure relates to a separator, a method for manufacturing the same, and a secondary battery including the same. Specifically, the present disclosure relates to a separator including hollow conductive particles, a method for manufacturing the same, and a secondary battery including the same. The present invention further relates to a method for manufacturing a secondary battery including the separator. Further provided is a use of the hollow conductive particles to suppress swelling; to suppress elution of an electrolyte; and/or to suppress formation and/or growth of dendrites in a secondary battery.

### BACKGROUND

Recently, since a secondary battery having a higher capacity and being larger in order to be applied to an electric vehicle and the like has been developed; it becomes a very important element to secure battery safety.

A lithium secondary battery is a battery including a negative electrode, a positive electrode, and an electrolyte providing a lithium ion migration path and a separator between the negative electrode and the positive electrode, and when insertion and desorption of lithium ions to two electrodes of the positive electrode and the negative electrode occur, electrical energy is produced by oxidation and reduction reactions.

However, during several charges and discharges, irregular needle-shaped dendrites are formed, caused by electrical isolation of lithium ions and accumulation of dead lithium ions, and internal resistance of a battery is increased by dendrite growth, resulting in a reduced charge/discharge efficiency of the battery. Further, a separator may be broken to cause short circuit inside the battery.

That is, Li dendrites which grow in a repeated charge/discharge process become a cause of short circuit inside the battery, thereby causing a critical safety problem, as a surface of the lithium dendrite which is newly produced and exposed reacts with an electrolyte solution to rapidly deplete the liquid electrolyte, and a change in overall battery volume is great due to a change in electrode thickness, which occurs during a charge/discharge process in which lithium is peeled off/precipitated.

Thus, in Korean Patent Laid-Open Publication No. 10-2019-0046237, a metal ion receptor which absorbs produced dendrites is provided in a battery cell to prevent internal short circuit by dendrites. However, an energy capacity is decreased as compared with a conventional battery by a separate space for accommodating dendrites, that is, a space occupied by the metal ion receptor, and a method for forming the metal ion receptor is complicated. Since a capacity of dendrites accommodated by the metal ion receptor is limited, a secondary battery life may not be substantially increased.

In order to solve the problems, it is an object of the present invention to provide an improved separator which may have improved properties such as regarding conductivity of e.g., lithium ions. It is further an object of the present invention to provide an improved method for manufacturing such a separator, as well as to provide an improved secondary battery comprising said separator.

[Related Art Documents]

[Patent Documents]

(Patent Document 1) Korean Patent Laid-Open Publication No. 10-2019-0046237 (May 7, 2019)

### SUMMARY

According to an aspect of the present disclosure, a separator is provided which may suppress formation and growth of dendrites to secure battery safety. The separator of the present disclosure can be used in a secondary battery.

According to another aspect of the present disclosure, a new separator is provided, which has ability to internally accommodate swelling by an electrolyte and the like.

According to another aspect of the present disclosure, a new separator is provided, which may prevent electrical isolation of lithium ions and accumulation of dead lithium ions to suppress lithium dendrite growth.

According to another aspect of the present disclosure, a new separator is provided, which may include hollow conductive particles having a shell layer formed of a conductive material on the surface to prevent short circuit by electrical leakage and further improve battery safety.

According to another aspect of the present disclosure, a new separator is provided, which may be manufactured by one application process without a need of a separate application process due to the fact that after preparing a coating composition including hollow conductive particles and inorganic particles, a coating layer may be formed by one application process, and hollow conductive particles having a lower specific gravity than the inorganic particles float to form the coating layer.

According to another aspect of the present disclosure, a new separator is provided in which hollow conductive particles function as a buffer to internally accommodate swelling by an electrolyte to suppress swelling and also suppress elution of the electrolyte.

Still according to another aspect of the present disclosure, a secondary battery is provided, of which the safety is secured by including the separator according to an exemplary embodiment of the present disclosure.

In one general aspect, a separator includes: a porous substrate; and a coating layer which is placed on one or both surfaces of the porous substrate and includes inorganic particles and hollow conductive particles. The separator is suitable for separating a positive electrode from a negative electrode of a secondary battery.

The coating layer can be either directly placed on said surface of said porous substrate. Or it may be indirectly placed on said surface of said porous substrate, meaning that there may be a further inorganic particle layer between said surface of the porous substrate and the coating layer; this further (or additional) inorganic particle layer, which may be further included between the porous substrate and the coating layer but may not include the hollow conductive particles, refers to a layer formed of inorganic particles commonly used in the art of separators suitable for batteries, such as the ceramic coating (inorganic particle layer) of conventional ceramic-coated separators (CCS).

The separator has a flat form with two surfaces. If the coating layer is placed/present on both surfaces of the porous substrate, the coating layer is in the form of two layers on opposite sides of the porous substrate. The properties of both layers may be the same.

In an exemplary embodiment, when a surface of the coating layer facing the porous substrate is referred to as a first surface and an opposite surface of the first surface is referred to as a second surface, the second surface may have a higher content (amount) of the hollow conductive particles than the first surface.

The respective amount (content) of said first surface and of said second surface of the hollow conductive particles can be determined by any suitable method that is known to a skilled person. In the present invention, the following method was applied: By applying focused ion beam milling (FIB), the coating of the separator was cut, thereby obtaining a cross-section of the coating. Then, the distribution of the hollow conductive particles in the thickness direction (that is, in the direction from the second to the first surface, or in the direction from the first to the second surface) of the coating layer was determined, e.g., by using SEM, EDS, or FTIR ("Fourier-transform infrared spectroscopy"). If SEM is used, images of the sample are produced by scanning the surface of the cut coating, and it is thus possible to observe the obtained image. If EDS and FTIR are used, it is possible to thereby quantitatively confirm the distribution of the hollow conductive particles composed of polymers through elemental analysis such as Al, C, and O.

The gradient between the first and second surface of the coating can be determined using the same method. If the coating is on both sides of the porous substrate, the surface of the coating layer on one side of the substrate facing the porous substrate is referred to as a first surface and an opposite surface of the first surface of the coating on the same side of the substrate is referred to as a second surface.

In an exemplary embodiment, the coating layer may have a gradient in which the content of the hollow conductive particles is increased from the first surface towards the second surface of the coating.

The term "gradient" may mean a general trend of an increase of the content of the hollow conductive particles to the opposite of the first surface, including a structure where the increase is continuously or linear, and a structure where the increase is non-linear and optionally has intermittent constant content (but without an intermittent decrease) of the hollow conductive particles.

In an exemplary embodiment, the coating layer may include an inorganic particle sub-layer including the inorganic particles and a conductive sub-layer formed by the hollow conductive particles.

The inorganic particle sub-layer may be formed at the first surface facing the porous substrate, and the conductive sub-layer including the hollow conductive particles may be formed at the second surface opposite the first surface. Withing the context of the described sub-layers, the hollow conductive particles of the conductive sub-layer may float on the inorganic particles of the inorganic particle sub-layer. Within the meaning of the present invention, the term "floating" refers to circumstances that hollow conductive particles, which are present in a coating composition and a slurry for its preparation and which typically, due to the hollow structure, have a lower specific gravity than the inorganic particles also present in the coating composition and the slurry for preparing it, upon forming a coating layer will arrange themselves towards the surface of the coating layer, dependent on the gravity. Accordingly, the arrangement of the respective particles follows the principle that the higher the specific gravity, the more these particles (the inorganic particles) will sink to the surface facing the porous substrate, whereas the lower the specific gravity, the more these particles (the hollow conductive particles) will float towards the opposite surface to the outside of the porous substrate.

In an exemplary embodiment, the hollow conductive particles may have a hollow rate of 5 to 97%, but are not limited thereto.

It is also possible that the hollow rate is 50 to 95%. Preferably, the hollow rate is 60 to 90%, preferably the hollow rate is 70 to 85%, more preferably the hollow rate is 75 to 85%.

In an exemplary embodiment, the hollow conductive particles may have an average outer diameter of 10 nm to 10 $\mu$m, or of 500 nm to 2 $\mu$m, or of 700 nm to 1200 nm, but are not limited thereto. The expression "average diameter" of a particle refers to the average diameter of more than one particle.

An average particle diameter (or an average diameter of a particle) may be measured using for example SEM ("Scanning Electron Microscopy") or similar observation methods. For example, in order to determine an average outer diameter of a particle, the outer diameter of each single particle of a sufficient number of particles, is measured by using SEM ("Scanning Electron Microscopy") or similar observation methods, preferably by using SEM. The values obtained for each single (individual) particle are added up and then the sum of these added-up values is divided by the number of particles measured, thereby arriving at the average particle diameter.

A sufficient number of particles can for example be 20, or 50. In this case, if the sufficient number of particles is 20, the sum of the added-up values is divided by 20.

The expression "diameter" of a particle refers to the diameter of a single particle.

In an exemplary embodiment, the hollow conductive particles may include, optionally consist of, a hollow core of a hollow structure having an empty inside, and a shell layer formed of any one or more conductive materials which may be, optionally are, selected from the group consisting of metals and conductive polymers.

In an exemplary embodiment, the hollow conductive particles may further include a structure material layer for maintaining a hollow structure between the hollow core and the shell layer.

In an exemplary embodiment, the structure material layer may include any one or more selected from inorganic materials and crosslinked polymers.

In an exemplary embodiment, the inorganic material may be selected from the group consisting of an oxide, a carbon material, or a mixture thereof, and the crosslinked polymer may include one or more selected from the group consisting of styrene-based, acrylic-based, and fluorine-based polymers, but the present disclosure is not limited thereto.

In an exemplary embodiment, an inorganic particle layer may be further included between the porous substrate and the coating layer. Herein, the inorganic particle layer is distinguished from the coating layer, and refers to a layer formed of inorganic particles commonly used in the art, that is, a ceramic layer. Specifically, for example, it may be a layer which is formed of only inorganic particles and has pores formed between the inorganic particles, or a layer having pores between the inorganic particles by the inorganic particles bound by a binder. Herein, the inorganic particle layer may not include the hollow conductive particles.

In another general aspect, a method for manufacturing a separator includes: a coating step of applying a coating composition including inorganic particles and hollow conductive particles on one or both surfaces of a porous substrate to form a coating layer; and a drying step of drying the coating layer.

In an exemplary embodiment, applying vibration may be further included before the drying step or with the drying.

In an exemplary embodiment, allowing the separator on which the coating composition is applied to stand may be further included before drying after the coating step.

In an exemplary embodiment, the coating composition may be applied multiple times on either or both surfaces of the porous substrate. For this purpose, the coating process be applied to the respective surfaces, and allowing the applied coating to stand, wherein a second coating is applied after the first coating has been dried.

In an exemplary embodiment, the coating layer may have a gradient formed by the hollow conductive particles formed at a surface of the coating layer after the coating step and the drying step. The coating layer may form a conductive sub-layer formed of the hollow conductive particles formed on the surface. In such a sub-layer, the conductive particles may float on the inorganic particles formed in the inorganic particle sub-layer.

In an exemplary embodiment, the coating composition may have a solid content of 10 to 60 wt%, or of 20 to 50wt%, or of 20 to 40 wt%, but is not limited thereto.

In an exemplary embodiment, the coating composition may include 0.2 to 20, or 0.2 to 10, or 0.5 to 10, or 0.5 to 5, parts by weight of the hollow conductive particles with respect to 100 parts by weight of the inorganic particles, but is not limited thereto.

In an exemplary embodiment, the drying may be performed by hot air at 25 to 100°C, or at 25 to 80°C, or at 30 to 60°C. Usually, the drying is performed until there is no more detectable weight loss.

In another general aspect, a secondary battery includes: the separator of the exemplary embodiment.

In still another general aspect, a method for manufacturing a secondary battery includes: placing the separator according to an exemplary embodiment between a positive electrode and a negative electrode and applying heat, pressure, or heat with pressure to integrate the separator and an electrode.

In still another general aspect, there is provided a use of hollow conductive particles according to the disclosure, which are structured to include a hollow core having an empty inside and a shell layer formed of an adhesive material, to suppress swelling; to suppress elution of an electrolyte; and/or to suppress formation and/or growth of dendrites in a secondary battery.

Other features and aspects will be apparent from the following detailed description, the drawings, and the claims.

**BRIEF DESCRIPTION OF THE DRAWINGS**

FIG. 1 illustrates an exemplary embodiment of a hollow conductive particle including a hollow core 11 having an empty inside and a shell layer 12 of a conductive material.

FIG. 2 illustrates an exemplary embodiment of a hollow conductive particle including a hollow core 11 having an empty inside, a structure material layer 13 for forming and maintaining a hollow structure, and a shell layer 12 formed of a conductive material.

FIG. 3 illustrates an exemplary embodiment of a method for manufacturing a separator.

[Detailed Description of Main Elements]

10: hollow conductive particles
20: inorganic particles
11: hollow core
12: shell layer
13: structure material layer
100: porous substrate
200: coating layer

**DETAILED DESCRIPTION OF EMBODIMENTS**

Technical terms and scientific terms used in the present specification have the general meaning understood by those skilled in the art to which the present disclosure pertains unless otherwise defined, and a description for the known function and configuration obscuring the gist of the present disclosure will be omitted in the following description and the accompanying drawings.

In addition, the singular form used in the present specification may be intended to also include a plural form, unless otherwise indicated in the context.

In addition, units used in the present specification without particular mention are based on weights, and as an example, a unit of % or ratio refers to a wt% or a weight ratio, and wt% refers to wt% of any one component in a total composition, unless otherwise defined.

In addition, the numerical range used in the present specification includes all values within the range including the lower limit and the upper limit, increments logically derived in a form and span of a defined range, all double limited values, and all possible combinations of the upper limit and the lower limit in the numerical range defined in different forms. Unless otherwise defined in the specification of the present disclosure, values which may be outside a numerical range due to experimental error or rounding off of a value are also included in the defined numerical range.

The term "comprise" in the present specification is an open-ended description having a meaning equivalent to the term such as "is/are provided", "contain", "have", or "is/are characterized", and does not exclude elements, materials, or processes which are not further listed.

In the present specification, unless particularly defined, when a layer or member is positioned "on" another layer or member, not only the layer or member is in contact with another layer or member, but also another layer or member exists between two layers or two members.

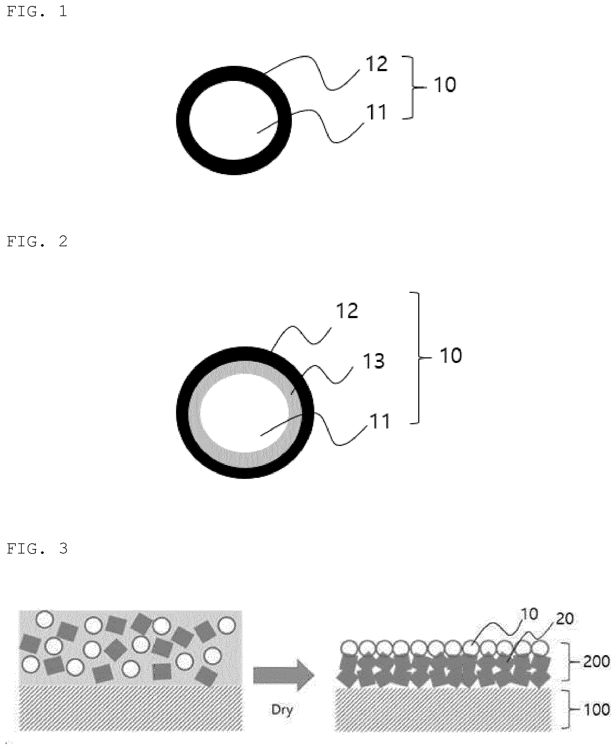

In the present specification, a "hollow conductive particle" refers to a particle having an empty inside and conductivity. Specifically, as shown in FIGS. 1 and 2, it includes a hollow core 11 having an empty inside (that is, having an inner void space) and a shell layer 12 formed of a conductive material, and the shell layer may be formed of at least one or more layers. In addition, as shown in FIG. 2, a structure material layer 13 for forming and maintaining a hollow structure may be further included between the hollow core 11 and the shell layer 12. FIGS. 1 and 2 are only for specifically illustrating the hollow conductive particles according to an exemplary embodiment of the present disclosure, and the present disclosure is not limited thereto.

In the conductive particles, "conductivity" refers to a material having a surface resistance of 10000 ohm/sq or less, when a conductive material forming a shell layer is coated at a thickness of 200 nm or more on a glass substrate or a silicon wafer, more specifically coated at a thickness of 200 nm.

A conventional secondary battery forms irregular needle-shaped dendrites that protrude on a surface of an electrode or a separator, caused by electrical isolation of lithium ions or accumulation of dead lithium ions. The dendrites may contribute to an increase of internal resistance of a battery, and may thereby lead to a reduction of charge/discharge efficiency of the battery. Further, the needle-shaped dendrites may break the separator and may thereby cause short circuit inside the battery.

As a result of research for solving the problems, it was found that by placing a coating layer as disclosed herein, that is, a coating layer which includes inorganic particles and hollow conductive particles comprising a shell layer formed of a conductive material, on the surface of the separator, formation of lithium dendrite may be prevented, a volume change of a battery may be suppressed, a change in volume of the battery may be suppressed, decomposition of an electrolyte may be suppressed, an increase in resistance of the battery may be suppressed, and/or cycle life of the battery may be increased. Use can be made of the aforementioned suppressing effects individually or in combination of one or more of these suppressing effects. In addition, it was found that a separator which has no need to add a separate application process due to the fact that inorganic particles for heat resistance are mixed to form the coating layer and conductive particles having a hollow structure are formed at a surface layer, or do float on a surface layer, due to a difference in a specific gravity from the inorganic particles, has a small change in air permeability of the separator as compared with the case of forming a separate conductive coating layer, and has excellent conductivity of lithium ions.

Specifically, it was found out that a separator including a porous substrate; and a coating layer which is placed on one or both surfaces of the porous substrate and includes inorganic particles and hollow conductive particles is provided, thereby solving the above problem to complete the present disclosure.

That is, it was found out that in a separator including a conventional porous substrate and a ceramic layer (hereinafter, also referred to as a "coating layer") which has pores formed by connection of inorganic particles to each other, which are formed on one or both surfaces of the porous substrate, hollow conductive particles are included in the ceramic layer with the inorganic particles, thereby solving the above problem to complete the present disclosure.

Since the hollow conductive particles have a structure having an empty inside (that is, having an inner void space), they have a lower specific gravity than the inorganic particles and may be formed at, or float on, the surface. Accordingly, since the coating layer is formed by applying the conductive particles with the inorganic particle without forming a separate conductive coating layer, conductivity may be imparted by the hollow conductive particles naturally formed at or floating on the surface layer.

Since the hollow conductive particles have a lower specific gravity than the inorganic particles due to the hollow structure, the hollow conductive particles may be easily guided to the surface of the coating layer when forming the coating layer, by including the hollow conductive particles in the coating layer as such. Accordingly, since there is no need to separately form a conductive coating layer, conductivity may be expressed even when a smaller amount of conductive material, that is, a smaller amount of hollow conductive particles, is included.

In addition, when swelling occurs by an electrolyte and the like, a separator of a new concept which may provide an effect of internally accommodating swelling to prevent occurrence of external swelling in the coating layer may be provided. In addition, a secondary battery including the separator according to an exemplary embodiment of the present disclosure may prevent various problems such as a resistance increase or cycle life reduction, during charge/discharge, prevent separation between an electrode and a separator to prevent resistance increased by the separation between the electrode and the separator, and also prevent swelling of a battery.

That is, a new separator which may prevent formation of lithium ion dendrites in the separator and the electrode when there is a coating layer including the hollow conductive particles, suppress a resistance increase, and internally accommodate swelling by an electrolyte and the like to have an effect of not externally swelling. Though the hollow conductive particles of the coating layer may be evenly distributed in the coating layer, more hollow conductive particles are distributed on a surface in contact with the electrode due to a difference in a specific gravity between the hollow conductive particles and the inorganic particles, thereby better preventing electrical isolation of lithium ions occurring from the electrode and accumulation of dead lithium ions, and thus, dendrite formation and growth may be more effectively prevented.

In addition, since the separator suppresses swelling by an electrolyte to minimize the loss of adhesive strength to an electrode, that is, prevent the loss of adhesive strength by swelling, a new separator which maintains alignment of an electrode module well even when many electrodes and separators are stacked, and a battery using the same are provided. In addition, improvement of electrode performance may be promoted by suppressing swelling and elution.

In addition, the hollow conductive particles having a lower specific gravity or density may be placed to be concentrated on a surface in contact with an electrode due to a difference in a specific gravity between the hollow conductive particles and the inorganic particles in the coating layer, and thus, the content of the hollow conductive particles showing conductivity may be minimized. Accordingly, since the content of the conductive particles may be minimized as compared with a case of separately forming a conductive coating layer, a battery performance degradation problem may be prevented, of course.

In the separator according to an exemplary embodiment of the present disclosure, when a surface facing the porous substrate is referred to as a first surface and an opposite surface of the first surface is referred to as a second surface, the second surface may have a higher content of the hollow conductive particles than the first surface.

In addition, the coating layer may have a gradient in which the content of the hollow conductive particles is increased from the first surface toward the second surface.

In addition, the coating layer may include an inorganic particle layer including the inorganic particles and a conductive layer formed by the hollow conductive particles formed at or floating on the inorganic particle layer. That is, as shown in FIG. 3, the hollow conductive particles may float to form a separate layer from the layer formed of the inorganic particles.

In the coating layer, since the hollow conductive particles have a lower specific gravity than the inorganic particles, the coating layer may have a gradient in which the concentration of the hollow conductive particles is increased farther away from the porous substrate. Since the conductive material is placed to be concentrated on the surface of the coating layer, as described above, the separator as such may have high conductivity as compared with the amount of the conductive material added.

In the present disclosure, the separator may include a single coating layer, but unlike this, a plurality of coating layers may be stacked, and in this case, the content of the hollow conductive particles to the inorganic particles for each layer varies by a plurality of stacks and the content of the hollow conductive particles is increased on the surface in contact with an electrode, thereby further improving conductivity.

That is, when the coating layer has a single layer structure, due to a specific gravity difference between the hollow conductive particles and the inorganic particles, in a process of coating the surface of the porous substrate with a slurry in which the hollow conductive particles and the inorganic particles are mixed and drying the slurry, the hollow conductive particles may naturally float on the surface to have a concentration gradient or form a separate conductive layer. Otherwise, after coating the slurry, a process of maintenance for a certain period of time so that the hollow conductive particles may sufficiently float on the surface and the inorganic particles may settle toward the porous substrate is introduced, and at this time, by adjusting the standing time, the concentration gradient of the hollow conductive particles may be intentionally formed. That is, when a surface of the coating layer facing the porous substrate is referred to as a first surface and the opposite surface of the first surface is referred to as a second surface, the gradient may be adjusted so that the concentration of the hollow conductive particles continuously increases from the first surface toward the second surface, or more hollow conductive particles are distributed on the second surface by adjusting the maintenance time. Otherwise, the conductive layer formed by the hollow conductive particles floating on the second surface may be formed.

In addition, the coating layer may have a multilayer structure in which at least one or more layers are stacked.

As an example, it may be a multilayer structure which is formed of a plurality of layers having different contents of the hollow conductive particles, by changing the contents of the inorganic particles and the hollow conductive particles. Specifically, the coating layer may have a structure which is divided into n layers (n is a natural number $\geq 2$) having different concentrations of the hollow conductive particles. Specifically, n may be 2 to 5.

The coating layer may include a first coating layer having a first content of the hollow conductive particles which includes a first surface in contact with the porous substrate and a second surface which is the opposite surface of the first surface, a second coating layer having a second content of the hollow conductive particles which includes a third surface in contact with the second surface and a fourth surface which is the opposite surface of the third surface, and an nth coating layer having an nth content of the hollow conductive particles. For example, when the coating layer is divided into two layers, it may be divided into a first coating layer having a first content of the hollow conductive particles and a second coating layer having a second content of the hollow conductive particles. In addition, each coating layer may be formed by being directly in contact with each other.

It is also possible that the coating layers have different coating compositions: For example, the coating compositions can differ in terms of the inorganic particles and/or hollow conductive particles used (that is, the inorganic particles and/or hollow conductive particles are different); and/or regarding the respective amount of the inorganic particles and/or hollow conductive particles used.

The respective coating layers (first, second, nth) that are included in the coating layer (that is, which form the coating layer) can be delimited from each other as each surface of the layer has a different concentration of the hollow conductive particles, by way of its preparation. For example, the first surface of the first layer has a less concentration (amount) of hollow conductive particles than the second surface of the first layer. The third surface of the second layer (which is adjacent to the second surface of the first layer) has a less concentration (amount) of hollow conductive particles than the second surface of the first layer. Thus, the first coating layer can be delimited from the second coating layer. This logic applies to all n coating layers that may be present.

In the present disclosure, since the separator has a porous structure, it has pores therein and may have porosity. The size and the porosity of pores formed in the separator may be appropriately adjusted depending on the porosity of the porous and the thickness of the coating layer. As an example, the average size of the pores formed in the separator, that is, the average diameter of the pores, may be 0.001 to 10 um, and the porosity may be 10 to 70%.

The separator according to an exemplary embodiment of the present disclosure may have a gas permeability of 500 sec/100 cc or less, 400 sec/100 cc or less, 300 sec/100 cc or less, 200 sec/100 cc or less, or 100 sec/100 cc or less. The gas permeability is measured in accordance with the standard of ASTM D 726, using a densometer available from Toyoseiki. In addition, a Gurley permeability change amount $\triangle G$ according to the following equation may be 50 sec/100 cc or less, 45 sec/100 cc or less, 40 sec/100 cc or less, 35 sec/100 cc or less, or 30 sec/100cc or less:

$$\triangle G = G1 - G2$$

wherein G1 is a Gurley permeability of a separator in which a coating layer is formed on both surfaces of a porous substrate, and G2 is a Gurley permeability of the porous substrate itself. The Gurley permeability is measured in accordance with the standard of ASTM D 726, using a densometer available from Toyoseiki, and its unit is sec/100 CC.

In addition, a heat shrinkage rate at 150°C may be 8% or less, 7% or less, 6% or less, 5% or less, 4% or less, 3% or less, 2% or less, or 1% or less. In addition, a heat shrinkage rate at 170°C may be 8% or less, 7% or less, 6% or less, 5% or less, 4% or less, 3% or less, or 2% or less.

In addition, the separator according to an exemplary embodiment of the present disclosure may have a capacity retention rate of 60 cycles or more, 65 cycles or more, 68 cycles or more, 70 cycles or more, 75 cycles or more, 80 cycles or more, 85 cycles or more on average, and for example, of 60 to 95 cycles or 65 to 90 cycles.

In addition, the separator according to an exemplary embodiment of the present disclosure may have a surface resistance of $1\times10^7$ $\Omega$/sq or less, $1\times10^6$ $\Omega$/sq or less, $1\times10^5$ $\Omega$/sq or less, or $1\times10^4$ $\Omega$/sq or less and $1\times10^2$ $\Omega$/sq or more or $1\times10^3$ $\Omega$/sq or more, and any value between the range described above. For example, the surface resistance may be $1\times10^2$ $\Omega$/sq or more and $1\times10^7$ $\Omega$/sq or less, $1\times10^2$ $\Omega$/sq or more and $1\times10^6$ $\Omega$/sq or less, $1\times10^2$ $\Omega$/sq or more and $1\times10^5$ $\Omega$/sq or less, or $1\times10^2$ $\Omega$/sq or more and $1\times10^4$ $\Omega$/sq or less. The surface resistance of the separator is measured on the coating layer, using a Four-Point Probe method under the conditions of a temperature of $25\pm5$°C and a relative humidity of $30\pm5$%, and applied voltage is performed at 5 V.

[Porous substrate]

As an example, the porous substrate of the separator is not limited as long as it is conventionally used as a substrate of the separator. Specifically, it may be a film, a sheet, non-woven fabric, and textile of a polymer material. Specifically, the porous substrate may include a porous substrate made of a polyolefin-based resin. The polyolefin-based resin may be one or more selected from the group consisting of high-density polyethylene, low-density polyethylene, linear low-density polyethylene, ultrahigh molecular polyethylene, polypropylene, and copolymers thereof, but is not limited thereto.

The thickness of the porous substrate is not particularly limited, but may be in a range of 1 to 100 $\mu$m, 5 to 60 $\mu$m, 5 to 40 $\mu$m, 5 to 20 um, or 5 to 10 um. The porous substrate may be in the form of a porous film.

The size of the pores formed in the porous substrate is not limited as long as lithium ions move well in the size, but it may be advantageous that the average diameter is 0.01 to 20 $\mu$m, 0.05 to 5 um, or 0.05 to 1 $\mu$m, for smooth movement of lithium ions and impregnation of the electrolyte solution. In addition, though it is not particularly limited, porosity may be 5 to 95% or 30 to 60%. The porosity may be calculated by the following equation from the ratio between the weight of a resin having the same volume and the weight of a separator (M g), after cutting a sample into a rectangle of A cm$\times$B cm (thickness: T $\mu$m), and measuring the mass: Porosity (%) = 100 $\times$ {1 - M $\times$ 10000 / (A $\times$ B $\times$ T $\times$ $\rho$)} wherein $\rho$ (g/cm$^3$) is a density of resin.

[Coating layer]

As an example, the coating layer is formed on one or both surfaces of the porous substrate, and may be a layer of a porous structure in which the inorganic particles and the hollow conductive particles are connected to each other to form pores. Otherwise, it may have a stacked structure in which an inorganic particle layer in which the inorganic particles are connected to each other to form pores and a conductive layer formed by the hollow conductive particles floating on the inorganic particle layer are formed. The coating layer may be formed by being directly in contact with the porous substrate. Otherwise, another layer which is usually used in a separator, specifically, an inorganic particle layer having pores formed between the inorganic particles, may be separately further provided between the porous substrate and the coating layer, but the present disclosure is not limited thereto.

Since the hollow conductive particles are concentrated on the surface in contact with an electrode, as described above, the coating layer may solve a problem of the conventional separator.

The thickness of the coating layer is not particularly limited, for example, the thickness of the coating layer formed on one surface of the porous substrate may be 0.1 um or more, 0.5 um or more, 1 um or more, 1.5 um or more, 2 um or more, 3 um or more, or 5 um or more, and for example, 0.1 to 10 $\mu$m, 0.2 to 5 um, or 0.2 to 3 $\mu$m, but is not limited thereto. In addition, the coating layer may include a conductive layer formed by the floating hollow conductive particles, and the thickness of the conductive layer is not limited, but may be 0.01 to 20 um. The thickness of the conductive layer may be adjusted by adjusting the content of the hollow conductive particles, but is not limited thereto.

As an example, a thickness ratio between the porous substrate : the coating layer of the separator is not limited as long as the purpose of the present disclosure may be achieved, but may be 1:0.01 to 1, or 1:0.05 to 0.5. Within the range, excellent battery stability, swelling suppression, battery performance improvement, and conductivity may be secured, and thus, the range is preferred, but the present disclosure is not limited thereto. As an example, the coating layer may be formed on 90% or more or 95% or more of the entire area of each surface, or 100% of the entire area of each surface of the porous substrate except the case in which fine defects occur, for each surface of the porous substrate.

The coating layer may further include other commonly known additives in addition to the inorganic particles and the hollow conductive particles described above. For example, the additive may be a dispersing agent, a lubricant, a defoaming agent, a thickening agent, or the like, and the content may be approximately a commonly used content.

In addition, the coating layer may further include an adhesive resin in terms of imparting bonding between the inorganic particles and imparting adhesiveness to an electrode, if necessary. The adhesive resin may be a water-based binder or a particulate binder, and is not limited as long as it is commonly used in the art. In addition, the adhesive resin may be used in a significantly smaller amount than a conventionally used amount so that the hollow conductive particles are prevented from floating. The conventional adhesive resin is not particularly limited, but, for example, may include any one or a mixture of two or more selected from acryl-based polymers, styrene-based polymers, vinylalcohol-based polymer, vinylpyrrolidone-based polymer, fluorine-based polymers, and the like.

For example, it may be any one, a mixture of two or more, or a copolymer thereof selected from polyacrylamide, poly(meth)acrylate, acrylic acid-methacrylic acid copolymer, polystyrene, polyvinylalcohol, polyvinylacetate, polyvinylacetate-polyvinylalcohol copolymer, polyvinylpyrrolidone, polyfluorovinylidene, polytetrafluoroethylene, polyhexafluoropropylene, hexafluoropropylene, polyvinylidenefluoride-hexafluoropropylene, polychlorotrifluoroethylene, and the like, but is not limited thereto.

The adhesive resin and the additive may be further included appropriately at minimum amounts, but as a non-limiting example, 0.1 to 5 parts by weight of the adhesive resin and 0.1 to 3 parts by weight of the additive may be included with respect to 100 parts by weight of the inorganic particles. This is only an example, and the present disclosure is not limited thereto.

The inorganic particles included in the coating layer may be, for example, any one or two or more selected from metal oxides, metal nitrides, metal carbides, metal carbonates, metal hydroxides, metal carbonitrides, and the like. For example, they may be one or more selected from boehmite, pseudo-boehmite, $Ga_2O_3$, SiC, $SiC_2$, Quartz, NiSi, Ag, Au, Cu, Ag-Ni, ZnS, $Al_2O_3$, $TiO_2$, $CeO_2$, MgO, NiO, $Y_2O_3$, CaO, $SrTiO_3$, $SnO_2$, ZnO, $ZrO_2$, and the like, but are not necessarily limited thereto, unless they are electrochemically unstable to have a significant influence on battery performance.

In an exemplary embodiment, the inorganic particle is boehmite or pseudo-boehmite or a mixture of both.

The shape of the inorganic particles is not particularly limited as long as the purpose of the porous substrate to improve durability and heat resistance is achieved. Specifically, the inorganic particles may have any one or more shapes selected from the group consisting of spherical, prismatic, and amorphous shapes.

In addition, the size of the inorganic particles is not limited as long as the purpose described above is achieved, and specifically, the size, that is, the average diameter of the inorganic particles may be 0.001 to 100 um, specifically 0.01 to 50 $\mu$m, and more specifically 0.01 to 10 um. Within the range, the separator may have the porosity in the range described above, but is not necessarily limited thereto.

Since the hollow conductive particles used in the coating layer have pores formed inside, as shown in FIGS. 1 and 2, they may have lower density and buoyancy than the inorganic particles, The hollow rate of the hollow conductive particles is not particularly limited, as long as the purpose described above, that is, forming density lower than that of the inorganic particles is achieved. As an example, the hollow rate of the hollow conductive particles may be 5 to 97%, 10 to 97%, 15 to 97%, 20 to 97%, or 50 to 95%, but is not limited thereto. The hollow rate may be calculated by the following equation from the outer diameter and the inner diameter of the hollow conductive particles. The outer diameter and the inner diameter refer to an average particle diameter and may be measured using for example SEM ("Scanning Electron Microscopy") or similar observation methods. Hollow rate (%) = inner diameter/outer diameter $\times$ 100, wherein the outer diameter refers to an average particle diameter, that is, an average outer diameter of the hollow conductive particles, and the inner diameter is calculated as a value obtained by subtracting the thickness of the shell layer from the average particle diameter, after measuring the thickness of the shell layer using e.g., SEM, or TEM ("Transmission Electron Microscopy"). In addition, in the case of hollow particles having a non-uniform hollow shape of the hollow conductive particles, the hollow rate may e.g., be calculated by a correlation between density measured using powder density measurement (apparent density) and theoretical density. In this case, the hollow rate (%) may be calculated by (1-apparent density/theoretical density)$\times$100.

Further, in the present disclosure, the thickness e.g., of a layer such as the shell layer or of a substrate such as the porous substrate, or of a film, is measured as follows:

The thickness of a shell layer or of a core, or the diameter of a hollow particle, is measured by applying an electron microscope, such as SEM or TEM, preferably TEM. The thickness of the porous film is measured by applying a Mitutoyo's thickness meter according to the manufacturer's instructions.

The hollow conductive particles impart conductivity to the coating layer, thereby preventing electrical isolation of lithium ions and accumulation of dead lithium ions. They include the hollow core 11 having an empty inside and the shell layer 12 formed of an adhesive material, as shown in FIG. 1, and the shell layer may be formed of at least one or more layers. In addition, as shown in FIG. 2, the structure material layer 13 for the hollow core forming and maintaining a hollow structure may be further included between the hollow core 11 and the shell layer 12.

The shell layer of the hollow conductive particles is not limited as long as it is a conductive material. For example, it may be formed of one or more conductive materials selected from the group consisting of metals and conductive polymers. The metal may be, for example, formed of metal nanoparticles. That is, it may be used without limitation as long as a shell layer formed of metal or conductive polymers is formed and it has a hollow structure having an empty inside(inner space).

Examples of suitable metals for forming the shell layer are Au, Ag, Ni, Sn, Zn, and Ti. A core-shell particle can for example be prepared as it is disclosed in J. Mater. Chem. C, 2015, 3, 3318, for example as follows:

The sensitization solution is prepared by dissolving 0.2 g of $SnCl_2$ and 0.074 g of HCl in 10 g of deionized water. The PS particles are sensitized under magnetic stirring in a water bath at room temperature. After 1 hour, the mixture is centrifuged three times to remove the excess $Sn^{2+}$ ions and re-dispersed in deionized water. The silver ammonia solution $(Ag(NH_3)_2 +)$ is prepared from $AgNO_3$ solution. 30 g of 4 wt% NaOH is dropped into 24 g of 12.5 wt% $AgNO_3$ solution resulting in the formation of a brown precipitate, followed by adding 6 g of 28 wt% $NH_3$ solution slowly to dissolve the precipitate. After the disappearance of the precipitate, 2.6 g of sodium citrate tribasic dehydrate is added into the mixture. Then the prepared silver ammonia solution is dropped into 30 g of 10 wt% Sn-functionalized PS latex with magnetic stirring for 3 hours at room temperature. Then, 2 wt% glucose solution is utilized to reduce the Ag ions. PS-Ag core-shell particles are obtained after centrifugation three times and dispersed in 120 g of deionized water.

Examples of suitable conductive polymers for forming the shell layer are: polyaniline, polyacetylene, and PEDOT:PSS (poly(3,4-ethylenedioxythiophene) polystyrene sulfonate). A core-shell particle can for example be prepared as it is disclosed in RSC Adv., 2015, 5, 81546-81553, for example as follows:

0.3 g of PS microspheres is dispersed in 20 ml $H_2O$, and then 0.28 g of aniline is put into this solution. The 0.68 g of APS wais added as the oxidant instead, and the molar ratio of aniline and ammonium persulfate is 1 : 1. Similarly, at the end of the reaction of 12 hours, it is washed with ethanol and de-ionized water.

The hollow conductive particles are not particularly limited as long as they have a surface resistance of 10000 Ω/sq or less and are hollow to have an empty inside.

In an example of the method for preparing the hollow conductive particles, polystyrene microspheres are sulfonated to prepare sulfonated polystyrene (PS), a conductive material such as aniline and pyrrole is oxidized and polymerized to form a shell layer, and then sulfonated polystyrene inside is dissolved to remove it, thereby preparing the particles, as described in "Uniform hollow conductive polymer microspheres synthesized with the sulfonated polystyrene template", July 2005, Materials Chemistry and Physics 92(1) :164-171.

In addition, since the method for preparing hollow conductive particles includes various methods such as a method including preparing hollow polymer particles by a preparation method in Korean Patent Laid-Open Publication No. 10-2020-0138213 (publication date: December 9, 2020), coating the surface with a binder slurry composition in which conductive metal nanoparticles or microparticles are dispersed or a conductive polymer resin solution composition, followed by a drying step, the description thereof will be omitted hereinafter.

In addition, the structure material layer may be used without limitation as long as it is a material for maintaining a hollow structure of a hollow core. Specifically, for example, it may be selected from $SiO_2$, $Al_2O_3$, ZnO, $TiO_2$, $SnO_2$, carbon, polystyrene, polyacrylate, PVDF, and the like, but is not limited thereto.

The size of the hollow conductive particles is not limited as long as they achieve the purpose described above, and the size, that is, the average outer diameter of the hollow conductive particles, may be 10 nm to 10 um, 50 nm to 5 μm, 0.1 to 5 um, or 0.2 to 2 μm, but is not necessarily limited thereto.

The coating layer may also include single structure hollow conductive particles or hollow conductive particles having an empty inside including a plurality of shell layers such as in a double layer or a triple layer.

The thickness of the shell layer of the hollow conductive particles is not particularly limited as long as the hollow rate described above is satisfied. Specifically, the thickness of the shell layer may be 0.0001 R to 0.8 R, specifically 0.001 R to 0.5 R, or 0.2 R or less with respect to the average outer diameter (R) of the hollow conductive particles, but is not limited thereto.

The coating layer may include more inorganic particles considering the content of the hollow conductive particles. The content of the hollow conductive particles may be a small amount to express conductivity and adhesiveness, and as an example, 0.1 parts by weight or more, 0.2 parts by weight or more, 0.3 parts by weight or more, 0.4 parts by weight or more, 0.5 parts by weight or more, 0.6 parts by weight or more, 0.7 parts by weight or more, 0.8 parts by weight or more, 0.9 parts by weight or more, 1.0 part by weight or more and 20 parts by weight or less, 19 parts by weight or less, 18 parts by weight or less, 17 parts by weight or less, 16 parts by weight or less, or 16 parts by weight of the hollow conductive particles may be used with respect to 100 parts by weight of the inorganic particles, and a range therebetween may be used. For example, 0.1 to 20 parts by weight, 0.2 to 20 parts by weight, 1 to 20 parts by weight, 1 to 15 parts by weight, 1 to 10 parts by weight, 1 to 8 parts by weight, or 1 to 5 parts by weight may be included, and though it is not limited thereto, sufficient electrode conductivity and adhesive strength may be exerted in the range. In addition, if necessary, 0.1 to 5 parts by weight of a non-hollow polymer binder and 0.1 to 5 parts by weight of an additive may be further included with respect to 100 parts by weight of the inorganic particles, but the present disclosure is not limited thereto.

The coating layer may further include a binder which connects and fixes the inorganic particles and the hollow conductive particles to each other, and also imparts adhesion between the coating layer and the porous substrate layer, of course.

The binder is not particularly limited, but, for example, may include any one or a mixture of two or more polymers selected from the group consisting of acrylic-based polymers, styrene-based polymers, ester-based polymers, amide-based polymers, imide-based polymers, amideimide-based polymers, vinylalcohol-based polymers, vinylpyrrolidone-based polymers, and fluorine-based polymers.

For example, the binder may be any one or a mixture of two or more selected from polyacrylamide, polymethacrylate, polyacrylate, polybutylacrylate, sodium polyacrylic acid, acrylic acid-methacrylic acid copolymer, polystyrene, polyvinylalcohol, polyvinylacetate, polyvinylacetate-polyvinylalcohol copolymer, polyvinylpyrrolidone, polyfluorovinylidene, polytetrafluoroethylene, polyhexafluoropropylene, hexafluoropropylene, polyvinylidenefluoride-hexafluoropropylene, polychlorotrifluoroethylene, and the like, but is not limited thereto.

The content of the binder is not particularly limited, but as a non-limiting example, 0.1 to 10 parts by weight of the binder and 0.1 to 5 parts by weight of an additive may be included with respect to 100 parts by weight of the inorganic particles.

In an exemplary embodiment, the binder is polyacrylamide. In a further exemplary embodiment, the inorganic particle is boehmite or pseudo-boehmite or a mixture of both.

In a further exemplary embodiment, the binder is polyacrylamide and the inorganic particle is boehmite.


[Method for manufacturing separator]

Hereinafter, a method for manufacturing a separator will be described in detail.

In the present disclosure, a method for manufacturing a separator includes: a coating step of applying a coating composition including inorganic particles and hollow conductive particles on one or both surfaces of a porous substrate to form a coating layer; and a drying step of drying the coating layer.

As an exemplary embodiment, as shown in FIG. 3, a coating composition including inorganic particles 20 and hollow conductive particles 10 is applied on one surface of a porous substrate 100, and then dried, so that the content of the hollow conductive particles is higher on the surface of a coating layer 200, that is, a surface which is not in contact with the porous substrate. Otherwise, the hollow conductive particles may be substantially guided to the surface to form a conductive layer.

As an example, when a surface facing the porous substrate is referred to as a first surface and an opposite surface of the first surface is referred to as a second surface, the second surface may have a higher content of the hollow conductive particles than the first surface.

As an example, the coating layer may be manufactured so as to have a gradient in which the content of the hollow conductive particles is increased from the first surface toward the second surface. Otherwise, the coating layer may include an inorganic particle layer including the inorganic particles and a conductive layer formed by the hollow conductive particles floating on the inorganic particle layer.

As an exemplary embodiment, in order to intentionally induce a gradient by a specific gravity difference between the hollow conductive particles and the inorganic particles or formation of a separate conductive layer, before the drying step, it may be allowed to stand for a certain period of time, vibrated, or allowed to stand and vibrated simultaneously or continuously, respectively, and then dried. That is, after the coating composition is applied, it may be allowed to stand for a certain period of time and then dried. Otherwise, after the coating composition is applied, it may be allowed to stand for a certain period of time, vibrated, and then dried. Otherwise, after the coating composition is applied, it may be vibrated while being allowed to stand for a certain period of time, and then dried. Otherwise, after the coating composition is applied, it may be allowed to stand for a certain period of time and then dried with vibration. Otherwise, after the coating composition is applied, it may be vibrated and then dried. Otherwise, after the coating composition is applied, it may be dried with vibration. As an exemplary embodiment, a time for standing for a certain period of time may be adjusted to adjust the gradient of the hollow conductive particles, or form a conductive layer formed by the floating hollow conductive particles.

As an exemplary embodiment, when the coating layer is formed on both surfaces of the porous substrate, the coating layer may be formed on one surface and then formed on the other surface. Coating may be performed on both surfaces simultaneously, but as intended in the present disclosure, it may be preferred to apply the composition individually in terms of guiding the hollow conductive particles to the surface.

As described above, the hollow conductive particles move to an air surface (an opposite surface of the surface in contact with the porous substrate) by the specific gravity difference and are dried, whereby many hollow conductive particles having adhesive and conductive properties are present on the surface, and surface resistance may be further lowered to suppress dendrite growth even when a low content of the hollow conductive particles is used.

The method for manufacturing a separator as such may easily produce a separator which has improved adhesive strength to an electrode, suppresses dendrite occurrence, and has an excellent effect of resistance against swelling, only by forming the coating layer including the hollow conductive particles on the porous substrate.

In the manufacturing method, since the porous substrate, the inorganic particles, the hollow conductive particles, and the manufactured separator are as described above, the detailed description thereof will be omitted, and each step will be further described.

The coating composition may be in a slurry form in which the inorganic particles and the hollow conductive particles are dispersed in a solvent. Besides, the coating composition may further include an adhesive resin, if necessary, and also, may further include an additive commonly used in the art.

The solvent is not particularly limited as long as the inorganic particles and the hollow conductive particles which are solids may be dispersed therein. As an example, water, lower alcohols such as ethanol, methanol, and propanol, solvents such as dimethylformamide, acetone, tetrahydrofuran, diethylether, methylene chloride, N-ethyl-2-pyrrolidone, hexane, and cyclohexane, or a mixture thereof may be used, but the present disclosure is not necessarily limited thereto.

The solid content in the coating composition in a slurry form may be appropriately adjusted so that the composition is easily applied and may induce layer separation by a density difference between the inorganic particles and the hollow conductive particles described above during drying. Specifically, the solid content in the coating composition may be 10 to 60 wt% or 20 to 50 wt%, but is not limited thereto. The solid includes the inorganic particles and the hollow conductive particles, and also, if necessary, may further include an adhesive resin. As an example, the solid content may include 0.1 to 20 parts by weight, 0.1 to 15 parts by weight, 0.1 to 10 parts by weight, 0.1 to 8 parts by weight, 0.1 to 5 parts by weight, or 0.1 to 2 parts by weight of the hollow conductive particles with respect to 100 parts by weight of the inorganic particles. In addition, if necessary, 0.1 to 5 parts by weight of the adhesive resin and 0.1 to 5 parts by weight of an additive may be further included with respect to 100 parts by weight of the inorganic particles, but the present disclosure is not limited thereto.

In addition, the coating composition may further include an additive within a range which does not significantly degrade applicability or battery performance. Specifically, for example, the additive may be a dispersing agent, a lubricant, a deforming agent, a thickener, or the like, and is not limited thereto, and since it is as described above, additional description will be omitted.

A coating method of coating one or both surfaces of the porous substrate with the coating composition is not limited, and specifically, for example, may be a common coating method such as bar coating, dip coating, flow coating, knife coating, roll coating, gravure coating, and spray coating.

In the drying step, a dying means is not particularly limited as long as 90% or more of the solvent may be removed. A drying temperature may be changed depending on the solvent, and for example, may be 20 to 200°C, and is not limited unless the surface structure is changed by rapid evaporation of the solvent or the hollow conductive particles are melted and collapse. As a specific example, drying may be performed by hot air at 25°C to 100°C and a drying time is not limited, but, for example, 5 seconds to 300 seconds. In addition, drying may be performed by a method of infrared, near-infrared, heating roll, and a hybrid form thereof. Within the range, the hollow conductive particles float well, so that more hollow conductive particles may be present in an upper area, a conductive layer, or an nth coating layer.

In an exemplary embodiment, the drying step may impart vibration or an artificial standing time before drying, or the concentration gradient of the hollow conductive particles may be imparted by the mixing means.

When the vibration is applied, the hollow conductive particles may float more easily by a specific gravity difference between the inorganic particles and the hollow conductive particles. A vibration method is not particularly limited as long as it may apply vibration to the coating composition. Vibration may be directly applied to the coating composition by applying energy, for example, by ultrasonic waves and the like. Unlike this, vibration may be applied to the coating composition by applying physical vibration e.g., by a motor.

In an exemplary embodiment, a standing step may be further included before the drying step so that the gradient of the hollow conductive particles is sufficiently formed. Specifically, the coating composition is applied on a porous substrate, and allowed to stand for 30 seconds to 1 hour, so that the hollow conductive particles sufficiently float on the surface of the coating layer. A standing temperature may be 0 to 50°C, preferably room temperature (25±5°C), but is not limited thereto.

[Secondary battery]

Hereinafter, a secondary battery will be described in detail.

In the present disclosure, the secondary battery includes the separator described above, and specifically, may have a structure in which the separator described above is interposed and combined between two electrodes, which are a negative electrode and a positive electrode.

Specifically, the positive electrode and the negative electrode are not limited as long as they are common materials used as the positive electrode and the negative electrode of a secondary battery.

The secondary battery including the separator described above may suppress lithium dendrite formation, increase battery life, and prevent separation between an electrode and a separator during charge/discharge. Thus, various problems such as a resistance increase or a reduced cycle life by separation between the electrode and the separator may be solved, and a higher capacity and a larger size are allowed, and thus, industrial availability may be substantially very high. In addition, in spite of high surface electrical conductivity, less conductive material is included and it is present only on the surface of the separator, and thus, an internal short circuit or battery performance degradation problem by the electrically conductive material may be prevented.

The invention also refers to a separator and secondary battery prepared by using the methods of the present invention.

Hereinafter, the present disclosure will be described in more detail with reference to the examples and the comparative examples. However, the following examples and comparative examples are only an example for describing the present disclosure in more detail, and do not limit the present disclosure in any way.

Hereinafter, the physical properties were measured as follows:

1) Manufacture of electrode

Manufacture of positive electrode: 92 wt% of a lithium cobalt composite oxide ($LiCoO_2$) as a positive electrode active material, 4 wt% of carbon black as a conductive material, and 4 wt% of polyvinylidene fluoride (PVDF) as a binder were added to N-methyl-2-pyrrolidone (NMP) as a solvent to prepare a positive electrode mixture slurry. The prepared slurry was applied on an aluminum (Al) thin film having a thickness of 30 $\mu$m, dried at a temperature of 120°C, and roll-pressed to manufacture a positive electrode having a thickness of 140 $\mu$m.

Manufacture of negative electrode: A lithium foil having a thickness of 20 um was compressed by a roll press on both surfaces of a copper (Cu) thin film having a thickness of 8 um to manufacture a negative electrode having a thickness of 48 $\mu$m.

2) Gas permeability

The gas permeability was measured using a Gurley type densometer available from Toyoseiki in accordance with JIS P8117. The measured value was corrected with a thickness value and used after being converted into a value having no difference depending on the thickness.

3) Gurley permeability change amount

The Gurley permeability change amount △G was calculated as follows:

$$\triangle G = G1 - G2$$

wherein G1 is a Gurley permeability of a separator in which a coating layer is formed on both surfaces of a porous substrate, and G2 is a Gurley permeability of the porous substrate itself. The Gurley permeability is measured in accordance with the standard of ASTM D 726, using a densometer available from Toyoseiki, and its unit is sec/100 CC.

4) Heat shrinkage rate

A separator of 10 cm×10 cm was allowed to stand at 130°C, 150°C, and 170°, respectively, for 1 hour, an area reduction rate was measured, and a heat shrinkage rate was calculated by the following equation:

Heat shrinkage rate (%) = ((length before heating - length after heating) / length before heating) × 100

5) Battery performance and battery deformation rate

The manufactured separator between a positive electrode and a negative electrode was used to assemble a pouch type battery in a stacking manner, and an electrolyte solution which was ethylene carbonate (EC)/ethyl methyl carbonate (EMC)/dimethyl carbonate(DMC)=3:5:2 (volume ratio) in which 1M lithium hexafluorophosphate (LiPF$_6$) was dissolved was injected into each of the assembled batteries to manufacture a lithium secondary battery. Thus, a pouch type lithium ion secondary battery having a capacity of 2000 mAh was manufactured. Evaluation of resistance (DC-IR) of the lithium secondary battery used a J-pulse (Japan Electric Vehicle Association Standards, JEVS D 713) method which evaluates 10 seconds discharge and charge characteristics at 0.25 C, 0.5 C, 1.0 C, 1.5 C, 2.0 C, and 2.5 C. The average impedance of three batteries was calculated by the above method to calculate an initial resistance value and the standard deviation thereof. A relative value of the initial resistance refers to an increased value as compared with the initial resistance of an uncoated porous substrate (Comparative Example 2).

Relative comparison with Ref. (%) = ((Impedance - Impedance$_{substrate}$) / Impedance$_{substrate}$) $\times$ 100

In the case of cycle capacity retention, charge/discharge was performed at 0.1 C in the first cycle, 0.2 C in the second cycle, and then 0.5 C in the third cycle and onwards, from 2.7 V (constant current) to 4.3 V (constant current constant voltage), and the number of cycles until the capacity retention rate of the battery was lowered down to 50% or less was measured.

6) Average particle diameter and average outer diameter

Average particle diameter (D50), D10, and D90 were measured using S3500 available from Microtrac which is a particle size analyzer.

7) Conductivity

The surface resistance of the coating layer was measured using a Four-Point Probe method under the conditions of a temperature of 25±5°C and a relative humidity of 30±5%. The applied voltage was performed at 5 V.

[Example 1]

3 parts by weight of polyacrylamide (Mw 150,000 g/mol, Sigma Aldrich) with respect to 100 parts by weight of boehmite ($\gamma$-AlO(OH)) having an average particle diameter of 300 nm was added to water, and 0.7 parts by weight of a dispersing agent (BYK-2018) with respect to 100 parts by weight of boehmite was added and stirred, thereby preparing a uniform water-based slurry having a solid content of 30 wt%.
Polyaniline hollow particles having an average outer diameter of 1 um and a hollow rate of 80% were prepared by an experiment method described in "Uniform hollow conductive polymer microspheres synthesized with the sulfonated polystyrene template" July 2005, Materials Chemistry and Physics 92(1):164-171 (section 2.4 "Preparation of sulfonated PS microspheres" therein); specifically, said polyaniline hollow particles were prepared as follows:
Sulfonated polystyrene (PS) powder (1.17 g) was dispersed in 40 ml of water. Subsequently, 0.254 g aniline monomer in 4 ml 2 M HCl aqueous was added to the above mixture. The monomer/sulfonated PS reaction mixture was stirred in an ice bath for 5 h, then added 0.6 g [NH$_4$]$_2$S$_2$O$_8$ (in 5 ml deionized water). The polymerization had been proceeding for 24 h by stirring slowly at 0°C. After the resulting polyaniline (PANI)-coated PS particles were purified by repeated centrifugation/redispersion cycles and dried in vacuum drying oven at 50 °C, PS-PANI core-shell microspheres were obtained. After dissolved with N,N-dimethylfomamide (DMF), PS cores were removed from core-shell particles and uniform hollow PANI microspheres were obtained.
1 part by weight of said polyaniline hollow particles with respect to 100 parts by weight of boehmite were added thereto, and water was further added to prepare a slurry composition having a final solid content of 25 wt%.
The prepared slurry composition, as a water-based slurry, was coated on both surfaces of a polyolefin microporous film having a thickness of 9 um (ENPASS, SK Innovation, average pore size: 40 nm) as a substrate using bar coating at a speed of 10 m/min, and then dried with hot air at 45 °C. The drying was performed until there was no more weight loss. Then, winding was carried out. The thickness of the double-sided coating layer after drying was 3.0 pm, respectively. The physical properties of the manufactured separator were evaluated and are listed in Table 1, and the manufactured separator was used to evaluate cell physical properties which are listed in Table 2.

The manufactured separator was observed using an energy dispersive spectrometer (EDS) attached to the scanning electron microscope (SEM), and as a result, it was confirmed that hollow particles floating on the surface to form a conductive layer.

[Example 2]

The process was performed in the same manner as in Example 1, except that the slurry composition was applied on one surface of a polyolefin microporous film fixed to a glass plate having a size of 0.2 m×0.2 m using bar coating and allowed to stand for 3 minutes, ultrasonic vibration was applied to the glass plate, and drying with hot air at 45°C until there was no more weight loss. This coating process was repeated on the other surface, so that one coating was applied on each side. The physical properties of the manufactured separator were evaluated and are listed in Table 1, and the manufactured separator was used to evaluate cell physical properties which are listed in Table 2.
The manufactured separator was observed using EDS attached to the scanning electron microscope (SEM), and as a result, it was confirmed that hollow particles floating on the surface to form a conductive layer. In addition, it was confirmed that more hollow particles floated on the surface than in Example 1.

[Example 3]

The process was performed in the same manner as in Example 1, except that 2 parts by weight of the hollow particles with respect to 100 parts by weight of boehmite were added. The physical properties of the manufactured separator were evaluated and are listed in Table 1, and the manufactured separator was used to evaluate cell physical properties which are listed in Table 2.

[Example 4]

The process was performed in the same manner as in Example 1, except that 5 parts by weight of the hollow particles with respect to 100 parts by weight of boehmite were added. The physical properties of the manufactured separator were evaluated and are listed in Table 1, and the manufactured separator was used to evaluate cell physical properties which are listed in Table 2.

[Comparative Example 1]

A slurry was prepared in the same manner as in Example 1, except that the hollow particles were not used, and a separator was manufactured in the same manner as in Example 1. The physical properties of the manufactured separator were evaluated and are listed in Table 1, and the manufactured separator was used to evaluate cell physical properties which are listed in Table 2.

[Comparative Example 2]

The physical properties of the polyolefin microporous film (ENPASS, SK Innovation, average pore size: 40 nm) used in Example 1 were evaluated, and are shown in the following Table 1. That is, the physical properties of the polyolefin microporous film itself were measured without forming the coating layer and are shown in Table 1, and the physical properties of a cell using the film were measured and are listed in Table 2:

[Table 1]

| | Thicknesses of coating layer (μm) | Heat shrinkage (TD%) | | | ΔGurley | Conductivity |
|---|---|---|---|---|---|---|
| | | 130°C | 150°C | 170°C | sec/100 cc | Surface resistance (Ω/sq) |
| Example 1 | 3/3 | 1.0 | 1.3 | 1.5 | 27 | $1.34 \times 10^3$ |
| Example 2 | 3/3 | 1.1 | 1.7 | 2.0 | 27 | $0.92 \times 10^3$ |
| Example 3 | 3/3 | 1.1 | 1.4 | 1.6 | 26 | $0.78 \times 10^3$ |
| Example 4 | 3/3 | 1.2 | 2.1 | 2.5 | 22 | $0.67 \times 10^3$ |
| Comparative Example 1 | 3/3 | 1.0 | 1.8 | 1.9 | 31 | $1.24 \times 10^{11}$ |

(continued)

| | Thicknesses of coating layer (μm) | Heat shrinkage (TD%) | | | ∆Gurley | Conductivity |
|---|---|---|---|---|---|---|
| | | 130°C | 150°C | 170°C | sec/100 cc | Surface resistance (Ω/sq) |
| Comparative Example 2 | 0/0 | 6.9 | 53 | 62 | 0 | $5.24\times10^{12}$ |

[Table 2]

| | Impedance Initial | | | Cycle (Capacity retention rate < 50%) | |
|---|---|---|---|---|---|
| | Average (mΩ) | Standard deviation (STD) (mΩ) | Relative comparison with Ref. (%) | Average (cycle) | STD (cycle) |
| Example 1 | 27.1 | 0.33 | 1.3 | 69.4 | 4.2 |
| Example 2 | 26.8 | 0.21 | 0.1 | 72.2 | 3.5 |
| Example 3 | 27.0 | 0.22 | 0.9 | 77.9 | 4.3 |
| Example 4 | 27.2 | 0.29 | 1.6 | 89.1 | 5.1 |
| Comparative Example 1 | 27.8 | 0.37 | 3.9 | 42.5 | 5.2 |
| Comparative Example 2 | 26.8 | 0.28 | 0.0 | 38.4 | 4.8 |

The separator according to an exemplary embodiment of the present disclosure includes hollow conductive particles, and since the hollow conductive particles are present on the surface of the separator, the separator acts as a conductive layer in a state of being in contact with an electrode, and prevents electrical isolation of lithium ions and accumulation of dead lithium ions to suppress formation and growth of lithium dendrites. Accordingly, the battery safety may be secured.

In addition, the separator according to an exemplary embodiment of the present disclosure may prevent electrical short circuit by imparting conductivity to a surface layer.

In addition, according to an exemplary embodiment of the present disclosure, a new separator which functions as a buffer capable of internally accommodating battery swelling by an electrolyte and the like to suppress swelling may be provided.

In addition, a new separator which may prevent adhesive strength loss by swelling, since swelling is suppressed, to maintain adhesive strength to an electrode well, and which maintains alignment of an electrode module well even when many electrodes and separators are stacked, and a battery using the separator may be provided.

In addition, the method for manufacturing a separator according to an exemplary embodiment of the present disclosure may easily produce a separator which may suppress formation and growth of dendrites simply by forming a coating layer including hollow conductive particles on a porous substrate. In addition, inorganic particles and hollow conductive particles which form a ceramic layer for imparting heat resistance may be mixed and applied, and the manufacture may be performed so that more hollow conductive particles may be formed on the surface due to a difference in a specific gravity between the inorganic particles and the hollow conductive particles, by only one application.

In addition, the secondary battery including the separator according to an exemplary embodiment of the present disclosure secures safety to allow a higher capacity and a larger size, and thus, may provide an effect of very high industrial applicability. The disclosed technology can be implemented in rechargeable secondary batteries that are widely used in battery-powered devices or systems, including, e.g., digital cameras, mobile phones, notebook computers, hybrid vehicles, electric vehicles, uninterruptible power supplies, battery storage power stations, and others including battery power storage for solar panels, wind power generators and other green tech power generators. Specifically, the disclosed technology can be implemented in some embodiments to provide improved electrochemical devices such as a battery used in various power sources and power supplies, thereby mitigating climate changes in connection with uses of power sources and power supplies. Lithium secondary batteries based on the disclosed technology can be used to address various adverse effects such as air pollution and greenhouse emissions by powering electric vehicles (EVs) as alternatives to vehicles using fossil fuel-based engines and by providing battery-based energy storage systems (ESSs).

Hereinabove, although the present disclosure has been described by specific matters, the examples, and the comparative examples, they have been provided only for assisting in the entire understanding of the present disclosure. Therefore, the present disclosure is not limited to the above examples. Various modifications and changes may be made by those skilled in the art to which the present disclosure pertains from this description.

**Claims**

1. A separator for separating a positive electrode from a negative electrode of a secondary battery, comprising:

   a porous substrate (100); and
   a coating layer (200) which is placed on one or both surfaces of the porous substrate (100) and includes inorganic particles (20) and hollow conductive particles (10).

2. The separator of claim 1, wherein when a surface of the coating layer (200) facing the porous substrate (100) is referred to as a first surface and an opposite surface of the first surface is referred to as a second surface, the second surface has a higher content of the hollow conductive particles (10) than the first surface; optionally wherein the coating layer (200) has a gradient in which the content of the hollow conductive particles (10) is increased from the first surface towards the second surface of the coating.

3. The separator of claim 1 or 2, wherein the coating layer (200) includes at a first surface facing the porous substrate an inorganic particle sub-layer including the inorganic particles (20), and at a second surface opposite the first surface a conductive sub-layer formed by the hollow conductive particles (10).

4. The separator of any one of claims 1 to 3, wherein the hollow conductive particles (10) have a hollow rate of 5 to 97%.; and/or wherein the hollow conductive particles have an average outer diameter of 10 nm to 10 $\mu$m.

5. The separator of any one of claims 1 to 4, wherein the hollow conductive particles (10) include a hollow core having an empty inside (11), and a shell layer (12) formed of any one or more conductive materials selected from metals and conductive polymers; optionally, the hollow conductive particles (10) further include a structure material layer (13) between the hollow core (11) and the shell layer (12), wherein the structure material layer (13) serves to maintain the hollow structure.

6. The separator of claim 5, wherein the structure material layer (13) includes one or more selected from the group consisting of inorganic materials and crosslinked polymers; optionally

   wherein the inorganic material is an oxide, a carbon material, or a mixture thereof, and
   wherein the crosslinked polymer includes one or more polymers selected from the group consisting of styrene-based, acrylic-based, and fluorine-based polymers.

7. The separator of any one of claims 1 to 6, further comprising an inorganic particle layer between the porous substrate (100) and the coating layer (200).

8. A method for manufacturing a separator for a battery, the method comprising:

   a coating step of applying a coating composition including inorganic particles and hollow conductive particles (10) on one or both surfaces of a porous substrate (100) to form a coating layer (200); and
   a drying step of drying the coating layer (200), thereby obtaining the separator.

9. The method for manufacturing a separator of claim 8, wherein the drying is performed by hot air at 25 to 100°C, and/or further comprising applying vibration before the drying step or applying vibration with the drying.

10. The method for manufacturing a separator of claim 8 or 9, further comprising: allowing the separator on which the coating composition is applied to stand before drying after the coating step, optionally wherein for applying the coating composition multiple times on either or both surfaces of the porous substrate, for the respective surfaces the coating process and allowing to stand are performed in separate steps, wherein a second coating is applied after the first coating has been dried.

11. The method for manufacturing a separator of any one of claims 8 to 10, wherein the coating layer (200) has a gradient formed by the hollow conductive particles (10) formed at a surface of the coating layer (200) after the coating step and the drying step,

and/or wherein the coating layer (200) has a conductive sub-layer formed of the hollow conductive particles (10) formed on the surface.

12. The method for manufacturing a separator of any one of claims 8 to 11, wherein the coating composition has a solid content of 10 to 60 wt%; and/or wherein the coating composition includes 0.2 to 20 parts by weight of the hollow conductive particles (10) with respect to 100 parts by weight of the inorganic particles.

13. A secondary battery comprising the separator of any one of claims 1 to 7.

14. A method for manufacturing a secondary battery, the method comprising: placing the separator of any one of claims 1 to 7 between a positive electrode and a negative electrode, and then applying heat, pressure, or heat with pressure to integrate the separator and the electrode, thereby obtaining the secondary battery.

15. Use of hollow conductive particles as defined in any one of claims 1 to 7, which are structured to include a hollow core having an empty inside and a shell layer formed of a conductive material on the surface, to suppress swelling; to suppress elution of an electrolyte; and/or to suppress formation and/or growth of dendrites in a secondary battery.

FIG. 1

FIG. 2

FIG. 3

Europäisches
Patentamt

European
Patent Office

Office européen
des brevets

# EUROPEAN SEARCH REPORT

Application Number

EP 24 17 6565

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HAKRAE JO: "Polyaniline-Encapsulated Hollow Co-Fe Prussian Blue Analogue Nanocubes Modified on a Polypropylene Separator To Improve the Performance of Lithium-Sulfur Batteries", APPLIED MATERIALS & INTERFACES, vol. 13, no. 40, 29 September 2021 (2021-09-29), pages 47593-47602, XP093161356, US ISSN: 1944-8244, DOI: 10.1021/acsami.1c12855 * page 47594 - page 47595 * | 1-15 | INV. H01M50/446 H01M10/052 H01M50/403 H01M50/414 H01M50/417 H01M50/449 |
| X | XIAO WEI ET AL: "Hollow mesoporous silica sphere-embedded composite separator for high-performance lithium-ion battery", JOURNAL OF SOLID STATE ELECTROCHEMISTRY, SPRINGER, BERLIN, DE, vol. 20, no. 10, 22 June 2016 (2016-06-22), pages 2847-2855, XP036056216, ISSN: 1432-8488, DOI: 10.1007/S10008-016-3268-6 [retrieved on 2016-06-22] * page 2849 - page 2850 * | 1-15 | |
| X A | WO 2022/260405 A1 (LG ENERGY SOLUTION LTD [KR]) 15 December 2022 (2022-12-15) * paragraph [0042]; claim all * | 1,4-15 2,3 | TECHNICAL FIELDS SEARCHED (IPC) H01M |
| A | KR 102 003 291 B1 (LG CHEMICAL LTD [KR]) 24 July 2019 (2019-07-24) * the whole document * | 1-15 | |

The present search report has been drawn up for all claims

| Place of search | Date of completion of the search | Examiner |
|---|---|---|
| Munich | 11 October 2024 | Götz, Heide |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 6565

This annex lists the patent family members relating to the patent documents cited in the above-mentioned European search report.
The members are as contained in the European Patent Office EDP file on
The European Patent Office is in no way liable for these particulars which are merely given for the purpose of information.

11-10-2024

| Patent document cited in search report | | Publication date | Patent family member(s) | | Publication date |
|---|---|---|---|---|---|
| WO 2022260405 | A1 | 15-12-2022 | CN 116325333 | A | 23-06-2023 |
| | | | EP 4203167 | A1 | 28-06-2023 |
| | | | KR 20220165920 | A | 16-12-2022 |
| | | | US 2023299420 | A1 | 21-09-2023 |
| | | | WO 2022260405 | A1 | 15-12-2022 |
| KR 102003291 | B1 | 24-07-2019 | NONE | | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020190046237

- KR 1020200138213

**Non-patent literature cited in the description**

- *J. Mater. Chem. C,* 2015, vol. 3, 3318
- *RSC Adv.,* 2015, vol. 5, 81546-81553

- Uniform hollow conductive polymer microspheres synthesized with the sulfonated polystyrene template. *Materials Chemistry and Physics,* July 2005, vol. 92 (1), 164-171